# FASCICULE DE BREVET EUROPEEN

(11) **EP 0 652 181 B1**
(45) Date de publication et mention de la délivrance du brevet: **08.01.1997**
(21) Numéro de dépôt: 94420304.1
(22) Date de dépôt: 08.11.1994
(51) Int. Cl.: C01F 7/06

(54) **Procédé de traitement de bauxites contenant un mélange de trihydrate d'alumine et de monohydrate d'alumine**
Verfahren zur Behandlung von einer Mischung von Aluminiumoxydtrihydrat und Aluminiumoxydmonohydrat enthaltenden Bauxiten
Process for the treatment of bauxites containing a mixture of alumina-trihydrate and alumina-monohydrate

(30) Priorité: 09.11.1993 FR 9313601
(43) Date de publication de la demande: 10.05.1995
(73) Titulaire: ALUMINIUM PECHINEY, 92400 Courbevoie (FR)
(72) Inventeur: Lamerant, Jean-Michel, F-13120 Gardanne (FR)
(74) Mandataire: Mougeot, Jean-Claude

(56) Documents cités:
- EP-A- 0 203 873
- US-A- 4 324 769
- US-A- 4 446 117

## Description

### DOMAINE TECHNIQUE

La présente invention concerne le traitement par attaque alcaline selon le procédé Bayer de bauxites mixtes, c'est-à-dire de bauxites à trihydrate d'alumine ou gibbsite contenant également de l'alumine à l'état de monohydrate ou boehmite dans la proportion pondérale d'au moins 5% de la quantité totale d'alumine dans la bauxite.

### ETAT DE LA TECHNIQUE

Le procédé Bayer largement décrit dans la littérature spécialisée constitue la technique essentielle de production d'alumine destinée à être transformée en aluminium par électrolyse ignée ou à être utilisée à l'état d'hydrate, d'alumine de transition, d'alumine calcinée, d'alumine frittée ou fondue, dans les nombreuses applications relevant du domaine des alumines techniques.

Selon ce procédé, le minerai de bauxite est traité à chaud au moyen d'une solution aqueuse d'hydroxyde de sodium à concentration appropriée, provoquant ainsi la solubilisation de l'alumine et l'obtention d'une solution sursaturée d'aluminate de sodium.

Après séparation de la phase solide constituant le résidu inattaqué (boues rouges) du minerai, la solution sursaturée d'aluminate de sodium est ensemencée avec des particules de trihydrate d'alumine dans le but de provoquer la précipitation de l'alumine sous forme de trihydrate d'alumine. La liqueur d'aluminate de sodium appauvrie en alumine, dite liqueur décomposée, est recyclée à l'étape de l'attaque après avoir été éventuellement concentrée et rechargée en hydroxyde de sodium pour constituer une liqueur, dite liqueur d'attaque, dont la concentration est appropriée à l'attaque du minerai.

Il est bien connu de l'homme du métier que, selon le degré d'hydratation et la structure cristallographique de l'alumine ainsi que la nature et la teneur des impuretés présentes dans la bauxite, les conditions de traitement doivent être adaptées. C'est ainsi que les bauxites contenant de l'alumine à l'état de monohydrate (boehmite, diaspore) sont traitées selon le procédé Bayer à des températures supérieures à 200°C et généralement comprises entre 220 et 300°C, alors que les bauxites contenant de l'alumine à l'état de trihydrate (gibbsite) sont traitées à des températures inférieures à 200°C et généralement comprises entre 100 et 170°C. Dans les 2 cas les rendements d'extraction peuvent dépasser 95% de l'alumine solubilisable contenue dans la bauxite.

S'agissant des bauxites riches en trihydrate, mais contenant une certaine quantité de monohydrate d'alumine (au moins 5% en poids de la quantité totale d'alumine dans la bauxite) que nous appellerons dans la suite de l'exposé bauxite mixte, la mise en oeuvre d'un traitement performant est souvent difficile. Par traitement performant il faut comprendre traitement assurant un rendement d'extraction de l'alumine solubilisable d'au moins 95% sans altération de la pureté du trihydrate d'alumine précipité ultérieurement et cela dans des conditions restant économiquement acceptables en termes notamment de coût d'exploitation et de productivité.

Une première possibilité consiste à traiter la bauxite mixte dans les conditions d'une bauxite à monohydrate, c'est-à-dire par attaque alcaline à des températures élevées généralement comprises entre 220 et 300°C, ce qui nécessite l'emploi de réacteurs à haute pression donc des investissements importants et engendre des coûts d'exploitation élevés compte tenu notamment de l'énergie consommée et des frais de maintenance. Si l'utilisation de liqueurs très concentrées en scude caustique permet de solubiliser de fortes quantités d'alumine, et ainsi d'obtenir des productivités élevées, cela se traduit parallèlement par le risque accru de passage en solution à l'état plus ou moins colloïdal de certaines impuretés comme le fer que l'on retrouve ensuite dans le trihydrate d'alumine précipité.

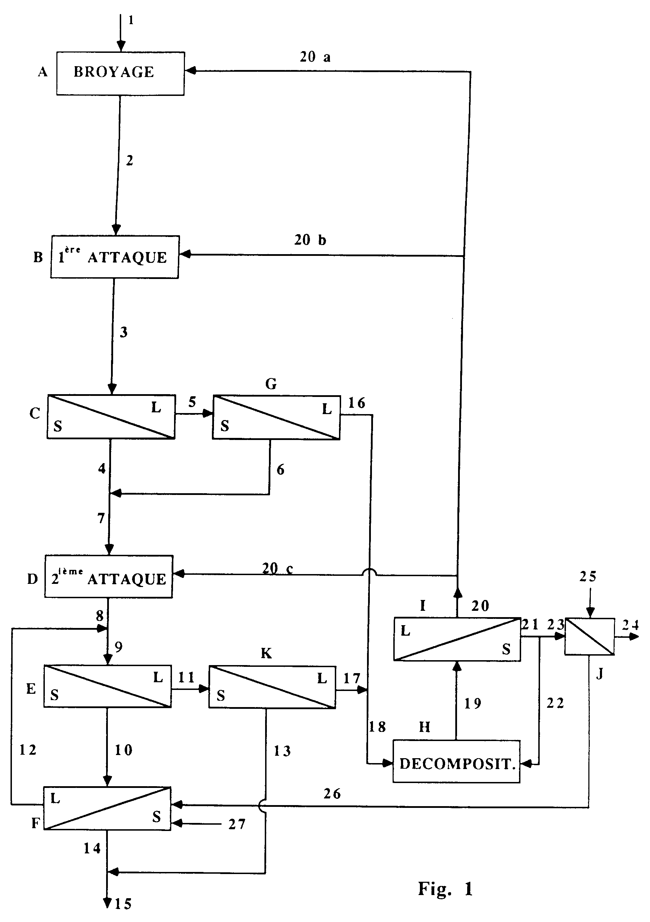

Une autre possibilité bien connue est l'attaque en 2 étapes de la bauxite mixte comportant une 1ère attaque conventionnelle à moins de 200°C du trihydrate d'alumine par une fraction de la liqueur décomposée, c'est-à-dire appauvrie en aluminate de sodium, suivie d'une 2ème attaque à plus haute température, par la fraction restante de liqueur décomposée, du résidu insoluble de 1ère attaque constitué par les boues rouges et le monohydrate inattaqué. Les liqueurs d'aluminate de sodium issues des 2 attaques sont ensuite filtrées et mélangées avant d'être décomposées en présence d'amorce pour précipiter le trihydrate d'alumine. Ce schéma de production est représenté à la figure 1 et sera explicité dans la description par comparaison au procédé de l'invention.

Les procédés d'attaque en 2 étapes des bauxites mixtes, apparemment mieux adaptés économiquement que les procédés d'attaque directe à haute température, se trouvent en fait souvent remis en cause par les effets nocifs de réactions secondaires intervenant au cours de leur mise en oeuvre et qui sont de 2 ordres :
1) Abaissement significatif du rendement d'extraction de l'alumine solubilisable pouvant atteindre 3 à 4% . Cela en raison d'un phénomène de précipitation intempestive d'alumine sous forme d'une fine suspension de trihydrate et éventuellement de boehmite dans la liqueur d'aluminate de sodium sursaturée au cours de l'étape de décantation-séparation des boues rouges qui suit la 1ère attaque. Cette précipitation appelée aussi rétrogradation se déclenche par nucléation spontanée du trihydrate d'alumine en solution lorsque le degré de sursaturation de la liqueur d'aluminate de sodium est élevé, notamment quand on recherche une productivité élevée par un accroissement du rapport pondéral Rp (Al₂O₃ soluble g/l / Na₂O caustique g/l) au-delà de 1,2 avec des concentrations en Na2O pouvant atteindre 150 g/l.
   Cette rétrogradation, qui peut être activée par la présence des fines particules de boues en suspension faisant office d'amorce de décomposition, est d'autant plus importante que le temps de décantation augmente. Or il est exclu de corriger cette rétrogradation lors de la 2° attaque réalisée à plus haute température par redissolution de l'hydrate précipité qui, en raison de son degré de finesse, interdit toute séparation par suite de l'encrassement des décanteurs et du blocage de l'ensemble des installations décantation-filtration de sécurité de la liqueur sursaturée à décomposer.
2) Pollution de cette même liqueur sursaturée par certaines impuretés contenues dans la bauxite mixte et susceptibles de passer en solution ou à l'état colloïdal et donc de rester dans la liqueur à décomposer même après filtration de sécurité. C'est notamment le cas, lors de la 1ère attaque à basse température de la bauxite mixte, pour la silice sous forme de silicate d'alumine hydraté soluble en milieu alcalin comme le Kaolin 2 SiO₂ Al₂O₃ 2H₂O, ou lors de la 2ème attaque à haute température, pour certains oxydes de fer qui passent à l'état d'hydroxyde ferreux colloïdal ou de complexe soluble tel que l'ion ferrate Fe (OH)₄- selon des processus mal connus. Lors de la décomposition de la liqueur sursaturée, ces impuretés se retrouvent en partie dans le trihydrate précipité.

Pour atténuer ces effets secondaires nocifs, l'homme du métier dispose d'un certain nombre de moyens.
Ainsi, il est connu (YAMADA- J1 of Jap. Inst. of Light Metals- vol.31 - p.43-48- Janvier 1981) que la rétrogradation de l'alumine en solution dans une liqueur sursaturée d'aluminate de sodium issue de l'attaque à basse température d'une bauxite riche en trihydrate est significativement réduite et retardée par la limitation du degré de sursaturation de la liqueur à décomposer. Cela se traduit pratiquement par l'obligation de maintenir le rapport pondéral Rp.< 1,1 dans la liqueur à décomposer, car il est exclu d'agir sur la concentration en soude caustique de la liqueur qui doit rester inférieure à 160 g Na₂O/litre pour ne pas perturber les opérations ultérieures de décomposition en présence d'amorce. La productivité mesurée par la variation de concentration d'alumine en solution dans un volume déterminé de liqueur avant et après décomposition (exprimée généralement en kg Al₂O₃/m³) s'en trouve affectée et ne peut guère dépasser alors 70 kg/m³.
Outre l'adaptation des conditions d'attaque, il convient aussi de faciliter la décantation des boues rouges afin de réduire l'effet d'activateur de rétrogradation des fines particules en suspension sachant qu'une rétrogradation intense peut encore se développer 5 ou 6 heures après le début de décantation. Pour ce faire l'homme du métier dispose de nombreux agents de floculation, généralement des polyélectrolytes anioniques, qu'il peut avantageusement combiner avec un adjuvant de clarification à base de polysaccharides comme le préconise US 5217620. Une autre solution consiste selon US 4994244 et EP 0422893 à effectuer la décantation des boues rouges à plus de 100°C sous pression ce qui permet d'abaisser la viscosité de la liqueur et surtout d'accroître l'efficacité des floculants.
Concernant les problèmes de pollution de la liqueur sursaturée par la silice et par suite du trihydrate d'alumine précipité lors de la décomposition, l'homme du métier peut choisir parmi de nombreux procédés de dessilicatation décrits notamment dans US 3413087, US 4426363, EP 0203873 et consistant à précipiter sous forme de silico-aluminate de sodium au moins une partie de la silice en solution avant ou pendant la 1ère attaque à basse température.

En revanche peu de procédés apportent une solution satisfaisante à la contamination de l'alumine par le fer contenu dans les bauxites mixtes, en particulier dans les bauxites originaires de Guinée (BOKE), pourtant à faible teneur en fer, car la plupart des procédés de l'art antérieur font appel:
- soit à des opérations spécifiques d'épuration qui renchérissent les coûts de production et diminuent les rendements, tel US 3607140 qui préconise une prédécomposition de la liqueur sursaturée en présence d'amorce au cours de laquelle les composés du fer à l'état métastable ou à l'état colloïdal coprécipitent avec une fraction du trihydrate d'alumine qui est donc sacrifiée en tant que piège à impuretés
- soit à des techniques de filtration des liqueurs sursaturées plus sélectives mais délicates à mettre en oeuvre industriellement comme la filtration sur lit de sable ou lit de bauxite selon US 3792542 et US 3728432, voire même US 4446117, dont l'efficacité reste limitée au piégeage des petites particules d'hydroxyde ferreux ne permettant en aucune manière d'abaisser à moins de 10 mg/litre la concentration en fer dans la liqueur, après cette filtration de sécurité renforcée. Or cette concentration reste encore trop élevée pour garantir une teneur pondérale en fer Fe/Al₂O₃ < 0,01% souvent requise pour le trihydrate d'alumine précipité ultérieurement.

Il apparait clairement que l'association des différents moyens de l'art antérieur ainsi décrits permet de limiter les effets nocifs de la rétrogradation sur le rendement d'extraction de l'alumine solubilisable ainsi que de la pollution par la silice réactive et le fer du trihydrate d'alumine de production. En revanche cette association de moyens s'accompagne d'un accroissement significatif des coûts d'exploitation en raison d'une part de la perte de productivité imposée par la limitation du Rp de la liqueur à décomposer (Rp < 1,1) et d'autre part des coûts de mise en oeuvre de ces moyens complémentaires spécifiques, notamment quand il s'agit de réaliser industriellement des décantations accélérées sous pression à plus de 100°C ou des filtrations de sécurité renforcées.

### PROBLEME POSE

Pour les producteurs d'alumine la mise au point d'un procédé performant de traitement des bauxites mixtes reste donc un objectif à atteindre compte tenu par ailleurs de l'importance croissante prise par ce type de bauxite comme source d'approvisionnement. Il doit pouvoir satisfaire en particulier aux 4 caractéristiques suivantes :
- taux d'extraction de l'alumine solubilisable ≥ 95%
- productivité à la décomposition supérieure ou égale à 70 kg Al₂O₃/m³ de liqueur
- teneur en fer < 10 mg/litre dans la liqueur avant décomposition
- rapport pondéral SiO₂/Na₂O ≤ 0,8% dans la liqueur avant décomposition.

### OBJET DE L'INVENTION

Le procédé mis au point par la demanderesse permet d'atteindre simultanément ces objectifs et pour l'essentiel il consiste à réaliser l'attaque à basse température de la bauxite mixte avec une liqueur concentrée en soude en visant un Rp très élevé, de 1,20 à 1,35, pour lequel la rétrogradation de la liqueur sursaturée lors de la décantation est considérablement diminuée dès l'instant que sa concentration en soude caustique est au moins égale à 160 g Na₂O/litre.

Les 2 inconvénients résultant d'une telle pratique à savoir l'augmentation de la teneur en fer de la liqueur issue de la 2ème attaque à haute température des boues et de la boehmite consécutivement à l'utilisation de liqueur d'attaque concentrée en soude et la difficulté de décomposer la liqueur sursaturée même en présence d'amorce en raison de sa forte concentration en soude, sont résolus simultanément par le recyclage de la liqueur décantée issue de 2ème attaque (dont le Rp est < 1) en tête de procédé comme liqueur de 1ère attaque en mélange avec la liqueur décomposée où de façon surprenante le fer en solution ou à l'état colloïdal est piégé au contact de la bauxite. Ainsi la pureté de la liqueur sursaturée issue de la 1ère attaque n'est pas du tout affectée, alors que sa nécessaire dilution en soude caustique (à moins de 160 g Na₂O/litre) avant décomposition est obtenue par le recyclage directement en tête de décomposition des eaux de lavage de trihydrate de production habituellement utilisées comme eaux de lavage à contre-courant des boues rouges.

Plus précisément, l'invention concerne un procédé de traitement de bauxite à base de trihydrate d'alumine et contenant du monohydrate d'alumine dans la proportion pondérale d'au moins 5% de la quantité totale d'alumine dans ladite bauxite, par attaque sodique et à basse température de la bauxite broyée pour former une suspension qui est décantée et filtrée pour séparer une liqueur sursaturée d'aluminate de sodium destinée à être décomposée en présence d'amorce et un résidu insoluble contenant notamment des boues rouges et le monohydrate d'alumine, ledit résidu insoluble étant alors attaqué en milieu sodique à plus haute température pour solubiliser le monohydrate d'alumine sous forme d'une liqueur d'aluminate de sodium qui est séparée des boues rouges par décantation, le procédé étant caractérisé par la combinaison d'opérations suivantes :
a) attaque à basse température, ou 1ère attaque, de la bauxite préalablement broyée, par mise en contact avec une liqueur dont la concentration en soude caustique est supérieure ou égale à 150 g Na₂O/litre et le Rp est compris entre 0,6 et 0,9, ladite liqueur d'attaque étant constituée par le mélange d'une aliquote de liqueur décomposée, issue d'une opération précédente de décomposition, avec une liqueur décantée issue de l'attaque à haute température, ou 2ème attaque, du résidu insoluble.
b) après un temps de contact suffisant pour solubiliser le trihydrate d'alumine, décantation de la suspension ainsi formée en présence d'un floculant pour séparer du résidu insoluble une liqueur sursaturée d'aluminate de sodium dont le Rp doit être compris entre 1,20 et 1,35 et la concentration en soude caustique au moins égale à 160 g Na₂O/litre.
c) filtration puis dilution de la liqueur sursaturée filtrée par l'eau de lavage du trihydrate d'alumine produit dans un précédent cycle pour abaisser sa concentration à moins de 160 g Na₂O/litre.
d) décomposition en présence d'amorce de la liqueur sursaturée d'aluminate de sodium après dilution, pour précipiter du trihydrate d'alumine dont l'eau de lavage après filtration est utilisée de préférence comme eau de dilution de la liqueur sursaturée en début de décomposition.
e) recyclage de la liqueur décomposée en tête de procédé selon 3 aliquotes réintroduites respectivement aux postes broyage et 2ème attaque ainsi qu'au poste 1ère attaque après mélange avec la liqueur décantée issue de 2ème attaque.
f) attaque à haute température ou 2ème attaque du résidu insoluble issu de la décantation et de la filtration de la suspension précédemment formée par mise en contact avec une aliquote de liqueur décomposée pendant un temps suffisant pour solubiliser le monohydrate d'alumine contenu dans le résidu insoluble et former une suspension de boues rouges dans une liqueur d'aluminate de sodium dont le Rp doit être inférieur à 1.
g) décantation et lavage à contre-courant du résidu insoluble de 2ème attaque constitué essentiellement des boues rouges qui sont éliminées alors que la liqueur d'aluminate de sodium de Rp < 1 issue de cette 2ème attaque, est recyclée en tête de procédé pour former, après mélange avec une aliquote de liqueur décomposée, la liqueur de 1ère attaque.

Lors d'essais de traitement par double attaque de bauxites mixtes, originaires notamment de Guinée et d'Australie, la demanderesse a pu trouver une solution commune au problème de la rétrogradation de l'alumine particulièrement important après la 1ère attaque ainsi qu'au problème de la pollution par le fer qui en découle indirectement dès que l'on utilise lors des attaques des liqueurs à forte concentration en soude caustique dans le but d'obtenir un rendement d'extraction de l'alumine de la bauxite et une productivité élevés.

L'invention repose sur un premier constat à savoir qu'il est tout à fait possible de limiter la rétrogradation de l'alumine sous forme de trihydrate dans la liqueur sursaturée issue de 1ère attaque dès le début de la décantation en réduisant la sursaturation non pas de façon classique par abaissement de Rp à moins de 1,1 mais en augmentant notablement la concentration en soude caustique de la liqueur, généralement comprise entre 100 et 150 g Na₂O/litre, à au moins 160 g Na₂O /litre et de préférence entre 160 et 180 g Na₂O/litre, c'est-à-dire dans une plage de concentration considérée comme rédhibitoire pour réaliser ensuite la décomposition de la liqueur sursaturée en présence d'amorce. Cette difficulté a été par ailleurs résolue en effectuant une légère dilution de la liqueur sursaturée en début de décomposition par l'eau de lavage du trihydrate d'alumine produit.

Ainsi dans la plage usuelle de température à laquelle s'effectue la décantation la mesure du degré de sursaturation B, défini par le rapport Rp/Rp équilibre de la liqueur sursaturée, fait ressortir, selon le tableau 1 ci-après, que pour un degré de sursaturation B ≤ 1,20 des Rp d'au moins 1,20 et même supérieurs à 1,30 sont accessibles sans rétrogradation sous forme de trihydrate à des concentrations en soude caustique ≥ 160 g Na₂O_{/}litre.

**TABLEAU 1**

| N°essai | B | t°C | Na2Ocaustique g/litre | Rp initial | Al(OH)3 dans les boues | Evolution du Rp |
|---|---|---|---|---|---|---|
| 1 | 1,05 | 100 | 165 | 1,20 | 0 | baisse lente |
| 2 | 1,10 | 103 | 165 | 1,30 | 0 | baisse lente |
| 3 | 1,10 | 98 | 180 | 1,33 | 0 | baisse lente |
| 4 | 1,20 | 95 | 150 | 1,20 | 0 | baisse lente |
| 5 | 1,25 | 90,5 | 160 | 1,20 | 0 | baisse lente |
| 6 | 1,30 | 90 | 160 | 1,31 | + | baisse rapide |
| 7 | 1,30 | 94 | 150 | 1,30 | + | baisse rapide |
| 8 | 1,30 | 93 | 140 | 1,25 | + | baisse rapide |

L'influence de la concentration en soude caustique sur la stabilité du Rp de la liqueur sursaturée après attaque (10 minutes à 145°C - bauxite BOKE) et au terme d'une décantation très prolongée (18 heures à 100°C) a été étudiée. Les principaux résultats sont regroupés dans le tableau 2 ci-après.

**TABLEAU 2**

| N°essai | Liqueur après attaque | | Liqueur après 18h à 100°C | | Δ Rp rétrogradation | * Al (OH)3 Rx dans boues | Filtration de sécurité -Vit. de filtration m3/m2/h |
|---|---|---|---|---|---|---|---|
| | Na2Og/l | Rp | Na2Og/l | Rp | | | |
| 9 | 142 | 1,27 | 142 | 1,17 | 0,10 | + | 0,3 |
| 10 | 142 | 1,33 | 145 | 1,12 | 0,21 | ++ | 0,2 |
| 11 | 163 | 1,32 | 166 | 1,26 | 0,06 | 0 | 1,5 |
| 12 | 165 | 1,32 | 168 | 1,26 | 0,06 | 0 | 1,4 |
| 13 | 155 | 1,27 | 158 | 1,22 | 0,06 | trace | 1,0 |

| | | | | | | | |
|---|---|---|---|---|---|---|---|
| (* + raie de diffraction ++ Raie de diffraction très marquée 0 aucune raie) | | | | | | | |

Il ressort que dans la plage des Rp élevés, 1,20 à 1,35, la rétrogradation est lente et purement boehmitique lorsque la concentration en soude caustique est ≥ à 160 g Na₂O/litre alors qu'au voisinage de 140 g Na₂O/litre la rétrogradation en trihydrate est intense et se manifeste dès le début de la décomposition. Cette observation est confirmée ensuite en fin de décantation par la détection aux rayons X de trihydrate d'alumine dans les bornes et par une diminution significative de la vitesse de filtration de la liqueur sursaturée.

Si la mise en oeuvre de liqueurs d'attaque fortement concentrées en soude caustique n'a pas d'effet néfaste sur la pureté de la liqueur sursaturée après décantation et filtration de sécurité puisque les teneurs en fer sont systématiquement inférieures à 10 mg/litre et cela quelle que soit la bauxite mixte utilisée, il n'en est pas de même pour la liqueur d'aluminate de sodium issue de 2ème attaque (entre 220° et 300°C) des résidus insolubles.
En effet, selon l'origine de la bauxite et la température de 2ème attaque, la teneur en fer même après filtration de sécurité peut varier de 20 à 80 mg/litre excluant tout mélange avant décomposition avec la liqueur sursaturée issue de la 1ère attaque dans la mesure où une teneur inférieure à 100 ppm de fer dans le trihydrate d'alumine précipité est visée. Il s'est confirmé lors de ces essais que le fer en solution peut se présenter sous différentes formes : fer soluble à l'état d'ions ferrate Fe (OH)₄-_{,} fer colloïdal à l'état d'agrégats non cristallisés de très petite taille (= 50 Å) n'interférant pas avec la lumière dans la solution qui reste donc limpide, fer à l'état de petites particules d'hydroxydes de taille comprise entre 0,1 et 5 µm.

Ce problème de l'épuration sélective de la fraction de liqueur issue de 2ème attaque autrement que par les techniques de filtration de l'art antérieur d'efficacité limitée et par le fait le problème de l'utilisation de cette liqueur, ont été résolus par le recyclage en tête de procédé de cette liqueur simplement décantée (avec des teneurs en fer pouvant donc atteindre jusqu'à 500 mg/l) comme liqueur de 1ère attaque en mélange avec une aliquote de liqueur décomposée. En effet de façon tout à fait surprenante ledit mélange de liqueurs, dont la teneur en fer peut atteindre encore 300 mg/l, est épuré au contact de la bauxite de telle sorte que la pureté de la liqueur sursaturée résultant de cette 1ère attaque est tout à fait équivalente (Fe < 8 mg/l) à celle d'une liqueur sursaturée issue de 1ère attaque de la bauxite mixte, selon l'art antérieur, uniquement par une aliquote de liqueur décomposée.

En plus de l'effet d'épuration ainsi constaté, le recyclage en tête de procédé de la liqueur d'aluminate de sodium issue de 2ème attaque directement après décantation, permet de supprimer une opération de filtration de sécurité toujours délicate à réaliser. Enfin, les risques de rétrogradation en cours de décantation de cette liqueur issue de 2ème attaque étant faibles compte tenu du Rp < 1, l'utilisation des eaux de lavage du trihydrate de production, contenant encore environ 30 gr de Na₂O/litre, s'avère beaucoup plus judicieuse comme eau de dilution de la liqueur sursaturée avant décomposition que comme eau de lavage à contre-courant des boues en cours de décantation tel que préconisé généralement par l'art antérieur. Un procédé considérablement modifié, intégrant ces nouvelles conditions a permis d'atteindre des rendements d'extraction d'alumine solubilisable supérieurs à 95%, voire à 98% dans certaines variantes, avec des teneurs en silice et fer très faibles dans la liqueur sursaturée destinée à la décomposition.
Ainsi, l'apport de chaux en petite quantité facilite le passage en solution de l'alumine contenue dans le résidu de 1ère attaque principalement à l'état de monohydrate. Sachant que la chaux peut être utilisée comme adjuvant de filtration de la liqueur décantée issue de 1ère attaque, l'apport de chaux dans le résidu avant attaque à haute température est automatiquement réalisé avec la récupération du gâteau des insolubles de filtration.
Par ailleurs dans les cas relativement fréquents où la bauxite contient de la silice réactive, c'est-à-dire de la silice susceptible de passer en solution dans la liqueur d'attaque puis de reprécipiter intempestivement lors des opérations ultérieures, entraînant une pollution des produits et un entartrage des échangeurs de température, il convient de procéder à une opération préalable de dessilicatation de la bauxite mixte par mise en contact avec une aliquote de liqueur décomposée au voisinage de 100°C pendant un temps suffisant de l'ordre de 5 à 10 heures, pour passer en solution la silice réactive et la reprécipiter à l'état de silicoaluminate de sodium insoluble.

L'invention sera mieux comprise par la description détaillée ci-après fondée sur les figures suivantes:
- Fig. 1 représentant schématiquement les flux de produit dans un procédé d'attaque en 2 étapes selon l'art antérieur
- Fig. 2 représentant schématiquement les flux de produit dans le procédé de base selon l'invention
- Fig. 3 représentant schématiquement les flux de produit dans la variante préférentielle du procédé selon l'invention combinant l'opération de dessilicatation avec le procédé de base.

Selon la fig. 1 représentative de l'art antérieur, la bauxite mixte 1 est, après broyage humide A en présence d'une 1ère aliquote de liqueur décomposée 20a, mise en contact B avec une 2ème aliquote 20b de liqueur décomposée pour former une suspension qui est chauffée à une température inférieure à 200°C pendant une durée suffisante pour solubiliser le trihydrate d'alumine. La suspension 3 résultant de cette 1ère attaque est refroidie et soumise à une décantation C pour séparer la liqueur sursaturée 5 d'aluminate de sodium qui, après filtration G, est destinée à être décomposée. A ce stade la liqueur 16, dont le Rp est < 1,1, contient moins de 8 mg de Fe par litre. Par ailleurs le flux de boues décantées 4 est mélangé au gâteau insoluble 6 de filtration. La suspension résultante 7, formée par les boues rouges, le monohydrate d'alumine inattaqué et éventuellement de l'adjuvant de filtration utilisé à l'étape G, est mise en contact D à une température comprise entre 220 et 300°C avec une 3ème aliquote 20c du flux 20 de liqueur décomposée. La suspension 8 résultant de cette 2ème attaque, après mélange avec les eaux de lavage 12 des boues décantées provenant d'une opération précédente, constitue la suspension 9 qui est soumise à une décantation E au cours de laquelle les boues décantées 10 sont lavées à contre-courant F avant d'être mises au rebut 14,15. Le flux 11 de liqueur d'aluminate de sodium issue de décantation E, dont la teneur en fer peut atteindre 500 mg/l, est filtrée de manière à abaisser cette teneur entre 15 et 50 mg/l dans la liqueur filtrée.
Le gâteau insoluble 13 de filtration, est rajouté aux boues rouges de décantation lavée 14 pour mise au rebut 15 alors que la liqueur sursaturée filtrée 17, dont le Rp est voisin de 1, est mélangée avec le flux de liqueur sursaturée 16 issue de la 1ère attaque pour constituer le flux de liqueur sursaturée 18 dont la teneur en fer reste supérieure à 10 mg/litre et qui après décomposition H en présence d'amorce recyclée 22 de trihydrate d'alumine, forme une suspension 19 de trihydrate d'alumine dans la liqueur décomposée.

Par filtration I de cette suspension on sépare la liqueur décomposée 20 dont la teneur en fer est réduite à moins de 5 mg/litre, qui est recyclée en tête de procédé comme liqueur de 1ère attaque 20a, 20b et de 2ème attaque 20c, alors que la phase solide de trihydrate d'alumine 21 est partagée, avec ou sans classement granulométrique, entre une 1ère fraction recyclée comme amorce 22 et une seconde fraction 23 réservée, après lavage à l'eau J, 25, à la production d'alumine 24.

L'eau de lavage 26 est réutilisée au poste F, comme eau de 1er lavage à contre-courant du résidu de 2ème attaque avant lavage à l'eau pure 27. A noter que le trihydrate d'alumine précipité dans l'étape de décomposition entraîne une partie du fer contenu dans la liqueur 18 sursaturée avant décomposition de sorte que la teneur en fer dans le trihydrate rapportée au poids de Al₂O₃ reste systématiquement supérieure à 0,01%. Le rendement global d'extraction de l'alumine solubilisable dans la bauxite mixte varie selon l'origine du minerai de 94 à 96% alors que la productivité n'excède pas 65 kg Al₂O₃ par m³ de liqueur puisque les Rp avant et après décomposition sont respectivement de l'ordre de 1,05 et de 0,6 alors que la concentration moyenne en soude caustique est d'environ 140 g Na₂O/litre.

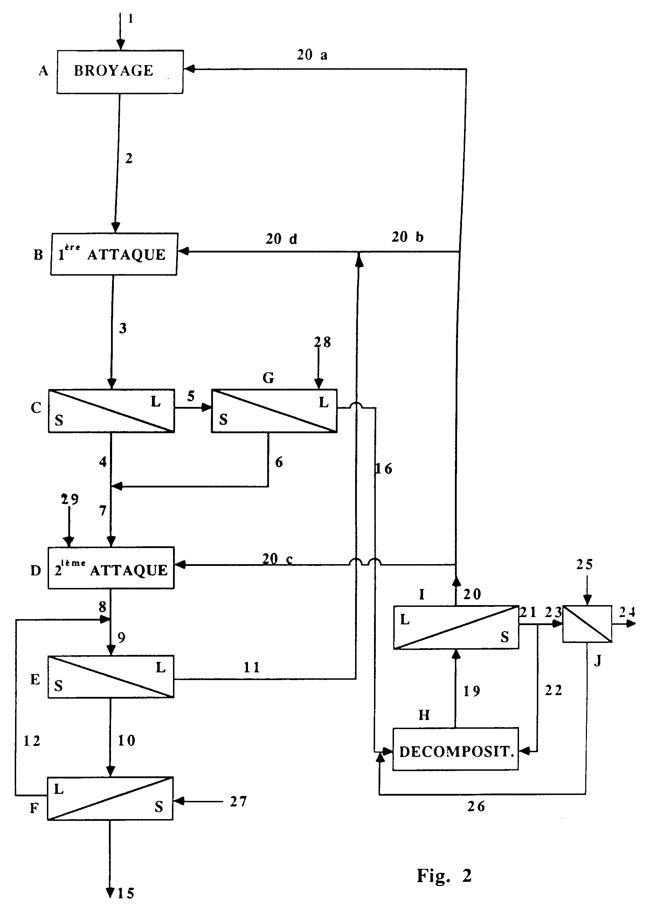

Le procédé de base selon l'invention schématisé à la fig. 2 est mis en oeuvre de la façon suivante:

La bauxite mixte 1, dont la teneur en alumine à l'état de monohydrate ou boehmite peut varier de 5 à 30% du poids total d'alumine contenu dans ladite bauxite, est broyée à l'état humide A avant attaque (tout passant à 200 micromètres) à partir d'une suspension à très haute concentration en matière sèche (700 à 1100 g de minerai par litre de suspension) dans une 1ère aliquote 20a prélevée dans le flux 20 de liqueur décomposée dont la concentration en soude caustique est comprise entre 140 et 180 g Na₂O/litre, le rapport Rp est compris entre 0,5 et 0,75 et de préférence entre 0,55 et 0,65 et la teneur en fer est inférieure ou égale à 3 mg/litre. La suspension broyée 2 est ensuite diluée dans 3 à 6 fois son volume de liqueur d'attaque 20 d résultant elle-même du mélange d'une 2ème aliquote 20b de liqueur décomposée 20 avec la liqueur décantée 11 issue de 2ème attaque 8. La concentration en soude caustique de la liqueur 11 après décantation et lavage des boues de 2ème attaque, est comprise généralement entre 150 et 180 g Na₂O/litre et son rapport Rp < 1 est de préférence compris entre 0,8 et 0,95. Sa teneur en fer selon l'origine de la bauxite peut varier de 10 à 500 mg/litre. Ainsi la liqueur d'attaque 20d résultant de ce mélange se caractérise par une concentration en soude caustique ≥ 150 g Na₂O/litre et de préférence comprise entre 155 et 180 g Na₂O/litre, un rapport Rp compris entre 0,6 et 0,9 et de préférence entre 0,65 et 0,85. La suspension diluée est alors chauffée entre 130 et 190°C et de préférence entre 135 et 180°C pendant 5 minutes à 1 heure et de préférence entre 5 et 20 minutes. La suspension 3 issue de cette 1ère attaque B est refroidie à moins de 100°C, puis décantée C pour séparer la liqueur sursaturée 5 dont le Rp doit être de préférence compris entre 1,25 et 1,30 et la concentration en soude caustique doit être de préférence comprise entre 160 et 180 g Na₂O/litre. De façon surprenante, après filtration de sécurité G, cette liqueur sursaturée filtrée 16 contient moins de 8 mg de fer par litre. Elle est ensuite diluée pour abaisser la concentration en soude caustique à moins de 160 g Na₂O/litre et de préférence entre 130 et 155 g Na₂O/litre avant décomposition H en présence d'amorce recyclée 22. Par filtration I, on sépare la liqueur décomposée 20 recyclée dans le procédé par les aliquotes 20a, 20b, 20c alors que la phase solide de trihydrate d'alumine 21 est partagée, avec ou sans classement granulométrique, entre une 1ère fraction recyclée comme amorce 22 et une seconde fraction 23 affectée après lavage à l'eau J, 25, à la production d'alumine 24. L'eau de lavage 26, qui selon l'art antérieur est recyclée comme eau de lavage à contre-courant des boues de 2ème attaque est dans le cas présent recyclée en tête de décomposition H comme eau de dilution de la liqueur 16. A noter que le trihydrate d'alumine précipité dans l'étape de décomposition à partir d'une liqueur sursaturée 16 peu chargée en impuretés (Fe < 8 mg/l) entraîne peu de fer puisque sa teneur en fer rapportée à Al₂O₃ n'excède pas 0,005%.

On constate une amélioration significative du rendement global d'extraction de l'alumine solubilisable si on effectue avant 2ème attaque un ajout de chaux 29 au résidu de 1ère attaque 7 constitué par les boues décantées 4 mélangé du gâteau insoluble 6 de filtration G. Cet apport de chaux pouvant atteindre 8% mais de préférence 1 à 5% en poids de CaO compté par rapport à la quantité correspondante de bauxite attaquée, est au moins en partie obtenu par l'utilisation d'un adjuvant de filtration à base de chaux 28 à l'étape G de filtration que l'on récupère ensuite dans le gâteau insoluble 6 et donc dans le résidu de 1ère attaque 7 mis en contact avec une 3ème aliquote 20c du flux 20 de liqueur décomposée. Cette 2ème attaque est réalisée à une température comprise entre 220 et 300°C et de préférence entre 240 et 250°C pendant 10 minutes à 1 heure et de préférence pendant 15 à 20 minutes. La suspension 8 résultant de cette 2ème attaque, après mélange avec les eaux de lavage 12 des boues décantées provenant d'une opération précédente, constitue le flux 9 de suspension qui est soumis à une décantation E au cours de laquelle les boues décantées 10 sont lavées à contre-courant F avant d'être mises au rebut 15.

Par ailleurs pour assurer la dissolution du monohydrate contenu dans le résidu et éviter également tout risque de rétrogradation, c'est-à-dire tout risque de reprécipitation sous forme de monohydrate et de trihydrate de l'alumine en solution, le rapport Rp de la solution sursaturée 11 issue de décantation E est maintenu inférieur à 1 et de préférence entre 0,8 et 0,95. Dans ces conditions des rendements d'extraction de l'alumine solubilisable de l'ordre de 96% sont ordinairement obtenus, ces rendements pouvant dépasser 98% si l'on effectue un apport de chaux au résidu avant 2ème attaque. La liqueur 11 ainsi contrôlée est alors directement recyclée comme liqueur de 1ère attaque en mélange avec de la liqueur décomposée 20b et cela en dépit de sa très forte teneur en fer.

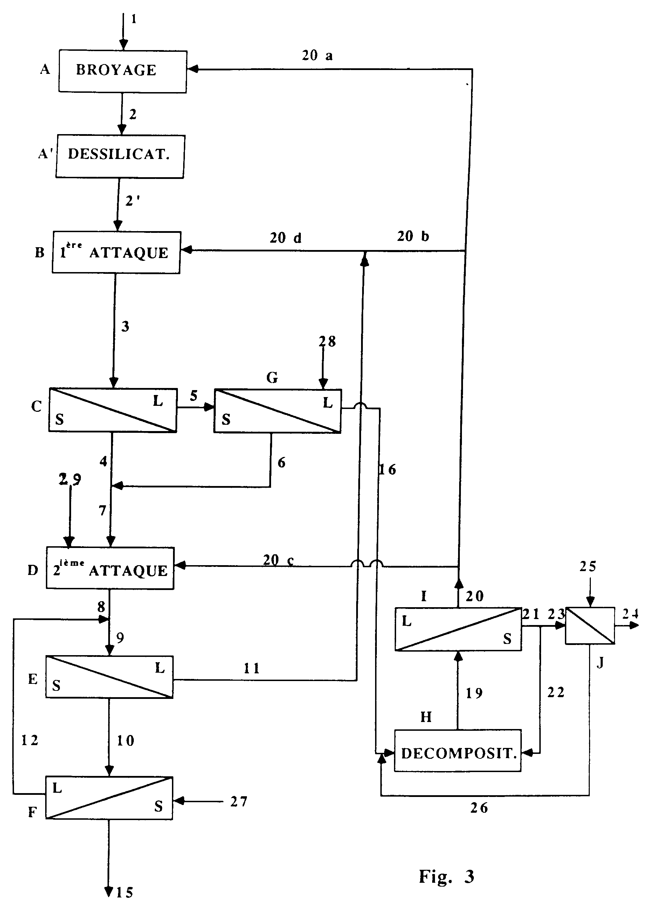

La variante préférentielle du procédé selon l'invention schématisée par la figure 3 consiste à faire précéder l'attaque à basse température de la bauxite mixte par une dessilicatation. On constate en effet avec la plupart des bauxites mixtes un enrichissement en silice de la liqueur sursaturée après attaque à basse température. Cet enrichissement, mesurée par le rapport pondéral de la silice en solution au poids de soude caustique exprimée en Na₂O, peut dépasser 1% dans la liqueur décantée 5 alors qu'il devrait se maintenir dans les limites des taux de solubilité de la silice dans les différentes liqueurs mises en oeuvre dans le procédé, c'est-à-dire entre 0,5 et 0,8% selon notamment la température et la concentration en soude caustique de ces liqueurs.

Comme indiqué précédemment la sursaturation en silice soluble des liqueurs d'aluminate de sodium en circulation conduit à des précipitations intempestives de silice sous forme de silicoaluminate de sodium se matérialisant par des dépôts de tartre dans les circuits notamment sur les tubes échangeurs de température mais aussi par une pollution en silice du trihydrate d'alumine précipité à partir de liqueurs anormalement chargées en silice, c'est-à-dire présentant un rapport pondéral SiO₂/Na₂O caustique supérieur à 0,8%.

Dans le but d'éviter ces inconvénients, la suspension de minerai 2 issue de l'étape de broyage humide A en présence de liqueur décomposée 20a dont la teneur en silice soluble SiO₂/Na₂O caustique est inférieure à 0,7% est soumis, avant attaque B à basse température par la liqueur 20d, à une dessilicatation intermédiaire A' consistant à chauffer au voisinage de 100°C et plus précisément entre 95°C et 107°C la suspension 2 à très haute teneur en matière sèche (700 à 1100 g/litre de suspension dans la liqueur 20a) pendant 6 à 12 heures et de préférence pendant 7 à 8 heures. Dans ces conditions la majeure partie de la silice réactive est solubilisée dans la liqueur 20a pour former une solution d'aluminate de sodium sursaturée en silice; elle a ensuite le temps de reprécipiter sous forme de silicoaluminate de sodium insoluble mais dont la cinétique de précipitation est lente. La suspension 2' issue de la dessilicatation A' se caractérise alors par un taux de silice soluble inférieure à 0,7% mais aussi par une concentration en Na₂O caustique comprise entre 130 et 170 g/l, au cours de la dessilicatation une partie du trihydrate d'alumine passant déjà en solution. Cette dissolution se poursuit lors de l'attaque à basse température B en présence de liqueur 20 d dans des conditions strictement identiques à celles décrites précédemment pour le procédé de base selon fig. 2, et il en est de même pour la suite des opérations.

### EXEMPLE D'APPLICATION N° 1

Cet exemple concerne le traitement en discontinu de 10 tonnes de bauxite Australienne de WEIPA ayant la composition pondérale suivante:
Al₂O₃% : 57,7 Fe₂O₃%: 11,9 SiO₂% : 5,41 TiO₂%: 2,78
Perte au feu %: 25.

Le pourcentage pondéral d'alumine solubilisable à l'état de monohydrate (boehmite) et à l'état de trihydrate (gibbsite) étant respectivement de 80% et 20%. Le traitement est effectué selon le procédé de base décrit à la figure 2, donc sans dessilicatation et avec un apport total de CaO de 2% en poids.
. Broyage humide A de la suspension à haute concentration en matière sèche : 1425 gr de minerai par litre de liqueur décomposée 20a dont la granulométrie est réduite à moins de 200 µm

Analyse de la liqueur décomposée 20 fractionnée en 3 aliquotes 20a, 20b et 20C.
Na₂O caust g/l : 163,7
Rp : 0,634
% SiO₂/Na₂O caust : 0,82
Fer mg/l : 2.

1ère attaque B à 135°C pendant 20 minutes de la suspension issue de broyage diluée dans 4,6 fois son volume de liqueur de 1ère attaque 20d. Cette liqueur de 1ère attaque, résultant du mélange de liqueur décomposée 20b et de liqueur 11 issue de 2ème attaque, a l'analyse suivante:
Na₂O caust g/l : 174
Rp: 0,82
% SiO₂/Na₂O caust : 0,74
Fer mg/l : 25.

- Après refroidissement et décantation C en présence d'un floculant (1‰ de Flocgel par rapport au poids de résidu insoluble) de la suspension 3 issue de 1ère attaque, analyse de la liqueur 5 sursaturée sortie de décantation à 100°C
   Na₂O caust g/l : 163
   Rp : 1,25
   % SiO₂/Na₂O caust : 0,79
   Fer mg/l : 60.

Cette même liqueur, après filtration G en présence de 0,5% de CaO comme adjuvant de filtration compté par rapport au poids de bauxite sèche mise en oeuvre en 1ère attaque, est diluée puis décomposée en présence d'amorce. La teneur en fer dans la liqueur filtrée avant décomposition est réduite à moins de 4 mg/l et que la teneur en fer dans le trihydrate d'alumine précipité lors de la décomposition et destiné à la production après lavage est de 30 ppm par rapport au poids d'Al2O3.
- Attaque D à 250°C pendant 15 minutes par la liqueur décomposée 20d du résidu insoluble 7 constitué par les boues décantées 4 contenant la boehmite inattaquée et le gâteau insoluble de filtration 6 contenant l'adjuvant de filtration à base de CaO; ces bornes décantées 4 étant additionnées de 1,5% en poids de CaO compté par rapport au poids de bauxite sèche mise en oeuvre en 1ère attaque.
- Décantation E en présence d'un floculant (1% 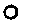 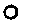 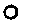 de Flocgel par rapport au poids du résidu insoluble 7) de la suspension 9 issue de l'attaque D, additionnée des eaux de lavage à contre-courant, et séparation des bornes qui après lavage F sont mises au rebut, alors que la liqueur décantée 11 est recyclée comme liqueur de 1ére attaque en mélange avec l'aliquote de liqueur décomposée 20b.

Analyse de la liqueur 11 sortie de décantation
Na₂O caust g/l : 177
Rp : 0,927
% SiO₂O/Na₂O caust : 0,5
Fer mg/l : 55

Le rendement d'attaque global sur alumine solubilisable est de 97% et la productivité déterminée à partir de la variation du Rp de la liqueur sursaturée avant et après décomposition est très voisine de 92 kg Al₂O₃/m³.

### EXEMPLE D'APPLICATION N° 2

Cet exemple concerne le traitement en discontinu de 10 tonnes de bauxite guinéenne de BOKE ayant la composition pondérale suivante : %Al₂O₃ : 60,5, %Fe₂O₃ : 4,75, %SiO₂: 1,36, %TiO₂ : 3,65, % perte au feu 29,0. Les pourcentages pondéraux d'alumine solubilisable à l'état de monohydrate (boehmite) et de trihydrate (gibbsite) étant respectivement de 14% et 86%.

Le traitement est effectué selon la variante préférentielle du procédé décrit à la figure 3 c'est-à-dire avec dessilicatation mais sans apport de CaO à l'étape de filtration G ou lors de la 2ème attaque D.
- Broyage humide A de la suspension à haute concentration en matière sèche : 1800 g de bauxite par litre de liqueur décomposée.
- Analyse de la liqueur 20 fractionnée en 3 aliquotes 20a, 20b et 20c
   Na₂O caust g/l : 164
   Rp : 0,63
   % SiO₂/Na₂O caust : 0,62
   Fer mg/l : 2
- La suspension 2 issue du broyage subit une dessilicatation A' par chauffage à 103°C pendant 8 heures.

Analyse de la liqueur dans la suspension 2' en sortie de dessilicatation.
Na₂O caust g/l : 136
Rp : 0,954
% SiO₂/Na₂O caust : 0,61

- 1ère attaque B à 150°C pendant 7 minutes de la suspension 2' diluée dans 5,6 fois son volume de liqueur de 1ère attaque 20d. Cette dernière liqueur résultant du mélange de liqueur décomposée 20b et de liqueur 11 issue de 2ème attaque, a l'analyse suivante:
   Na₂O caust. g/l : 171
   Rp : 0,80
   % SiO₂ /Na₂O caust : 0,40
   Fer mg/l : 22.

Après refroidissement et décantation C en présence de floculant (1% 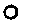 de Flocgel par rapport au résidu solide) de la suspension 3 issue de 1ère attaque, analyse de la liqueur 5 sursaturée sortie de décantation.
Na₂O caust g/l : 162
Rp : 1,31
% SiO₂/Na₂O caust : 0,63
Fer mg/l : 30.

Après filtration G, en l'absence de chaux, cette liqueur dont la teneur en fer est réduite à 6 mg/l est décomposée en présence d'amorce. La teneur en fer dans le trihydrate d'alumine précipité lors de la décomposition et destiné à la production après lavage est de 50 ppm par rapport au poids d'Al2O3.
- Attaque D à 245°C pendant 15 minutes par la liqueur décomposée 20d du résidu insoluble 7 constitué par les boues décantées 4 contenant la boehmite inattaquée et le gâteau insoluble de filtration 6.
- Décantation E en présence de floculant (1% 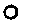 de Flocgel) de la suspension 9 issue de l'attaque D additionnée des eaux de lavage, séparation des boues qui après lavage F sont mises au rebut, la liqueur décantée 11 étant recyclée comme liqueur de 1ère attaque en mélange avec l'aliquote 20b de liqueur décomposée.

Analyse de la liqueur 11 sortie de décantation
Na₂O caust g/l : 172
Rp : 0,885
% SiO₂/Na₂O caust : 0,4
Fer mg/l : 50.

Le rendement d'attaque global sur alumine solubilisable est de 95,8% sans apport de chaux et la productivité de l'ordre de 100 kg Al₂O₃/m₃.

### EXEMPLE D'APPLICATION N° 3

Cet exemple concerne le traitement en discontinu de 10 tonnes de bauxite guinéenne de BOKE de l'exemple n° 2 selon la variante préférentielle du procédé décrit à la figure 3, c'est-à-dire avec dessilicatation et un apport total de CaO de 3% en poids.
- Broyage humide A de la suspension à haute concentration en matière sèche: 1780 g de bauxite par litre de liqueur décomposée.

Analyse de la liqueur 20 fractionné en 3 aliquotes 20a, 20b et 20c.
Na₂O caust g/l : 164
Rp : 0,64
% SiO₂/Na₂O caust : 0,66
Fer mg/l : 2

- Dessilicatation A' par chauffage à 103°C pendant 7 heures.

Analyse de la liqueur dans la suspension 2' en sortie de dessilicatation
Na₂O caust g/l : 125
Rp : 0,95
% SiO₂/Na₂O caust : 0,70

- 1ère attaque B à 180°C pendant 10 minutes de la suspension 2' diluée dans 6,2 fois son volume de liqueur de 1ère attaque 20d. Cette dernière liqueur résultant du mélange de liqueur décomposée 20b et de liqueur 11 issue de 2ème attaque, a l'analyse suivante:
   Na₂O caust g/l : 162
   Rp : 0,80
   % SiO₂/Na₂O caust : 0,45
   Fer mg/l : 14.

Après refroidissement et décantation en présence de floculant (1% 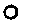 de Flocgel) C de la suspension 3 issue de 1ère attaque, analyse de la liqueur 5 sursaturée issue de décantation
Na₂O caust g/l : 161,7
Rp : 1,28
% SiO₂/Na₂O caust : 0,65
Fer mg/l : 35.

Après filtration G en présence de 0,5% de CaO comme adjuvant de filtration compté à partir du poids de bauxite attaquée, cette liqueur dont la teneur en fer est réduite à moins de 4 mg/litre est décomposée en présence d'amorce. La teneur en fer dans le trihydrate d'alumine précipité lors de la décomposition et destiné à la production après lavage est de 30 ppm par rapport au poids d'Al2O3
- Attaque 2 à 240°C pendant 20 minutes par la liqueur décomposée 20d du résidu insoluble 7 constitué par les boues décantées 4 additionnées de 2,5% en poids de CaO et par le gâteau insoluble de filtration 6 puis décantation E en présence de floculant (1% 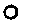 de Flocgel) de la suspension 9 issue de l'attaque D additionnée des eaux de lavage avec séparation des boues et de la liqueur décantée conformément aux exemples 1 et 2 précédents.

Analyse de la liqueur 11 en sortie de décantation
Na₂O caust g/l : 158
Rp : 0,892
% SiO₂/Na₂O caust : 0,41
Fer mg/l : 30.

Le rendement global d'attaque sur alumine solubilisable est de 99% et la productivité légèrement supérieure à 95 kg Al₂O₃/m³.

### INTERET DU PROCEDE

Tout en assurant des rendements d'extraction de l'alumine solubilisable d'au moins 95% et des productivités de l'ordre de 90 kg de Al₂O₃ par m³ de liqueur à décomposer, ce procédé permet d'abaisser la teneur en fer dans le trihydrate d'alumine à moins de 0,005% rapporté au poids de Al₂O₃,car la teneur en fer de la liqueur avant décomposition est toujours nettement inférieure à 10 mg/litre. De plus il apporte une simplification notable en cours d'exploitation en supprimant l'étape de filtration de sécurité de la liqueur décantée issue de 2ème attaque qui est directement recyclée en tête de procédé comme liqueur d'attaque en mélange avec une aliquote de liqueur décomposée.

Enfin, l'efficacité du procédé n'est en rien affectée par l'adjonction avant attaque d'une opération de dessilicatation qui permet de maintenir le rapport pondéral SiO₂/Na₂O caustique à moins de 0,8 dans la liqueur sursaturée avant décomposition et par suite la teneur pondérale en silice dans le trihydrate d'alumine précipité à moins de 150 ppm par rapport à Al₂O3.

## Revendications

1. Procédé de traitement de bauxite à base de trihydrate d'alumine et contenant du monohydrate d'alumine dans la proportion pondérale d'au moins 5% de la quantité totale d'alumine dans ladite bauxite, par attaque sodique et à basse température de la bauxite broyée pour former une suspension qui est décantée et filtrée pour séparer une liqueur sursaturée d'aluminate de sodium destinée à être décomposée en présence d'amorce et un résidu insoluble contenant notamment des boues rouges et le monohydrate d'alumine, ledit résidu insoluble étant alors attaqué en milieu sodique à plus haute température pour solubiliser le monohydrate d'alumine sous forme d'une liqueur d'aluminate de sodium qui est séparée des boues rouges par décantation, le procédé étant caractérisé par la combinaison d'opérations suivantes:
a) Attaque à basse température, ou 1ère attaque, de la bauxite préalablement broyée, par mise en contact avec une liqueur dont la concentration en soude caustique est supérieure ou égale à 150 g Na₂O/litre et le Rp est compris entre 0,6 et 0,9, ladite liqueur d'attaque étant constituée par le mélange d'une aliquote de liqueur décomposée, issue d'une opération précédente de décomposition, avec une liqueur décantée issue de l'attaque à haute température, ou 2ème attaque, du résidu insoluble.
b) Après un temps de contact suffisant pour solubiliser le trihydrate d'alumine, décantation de la suspension ainsi formée en présence d'un floculant pour séparer du résidu insoluble une liqueur sursaturée d'aluminate de sodium dont le Rp doit être compris entre 1,20 et 1,35 et la concentration en soude caustique au moins égale à 160 g Na₂O/litre;
c) Filtration puis dilution de la liqueur susaturée filtré par l'eau de lavage du trihydrate d'alumine produit dans un précédent cycle pour abaisser sa concentration à moins de 160 g Na₂O/litre.
d) Décomposition en présence d'amorce de la liqueur sursaturée d'aluminate de sodium après dilution, pour précipiter du trihydrate d'alumine dont l'eau de lavage après filtration est utilisée de préférence comme eau de dilution de la liqueur sursaturée en début de décomposition.
e) Recyclage de la liqueur décomposée en tête de procédé selon 3 aliquotes réintroduites respectivement aux postes broyage et 2ème attaque ainsi qu'au poste 1ère attaque après mélange avec la liqueur décantée issue de 2ème attaque.
f) Attaque à haute température ou 2ème attaque du résidu insoluble issu de la décantation et de la filtration de la suspension précédemment formée, par mise en contact avec une aliquote de liqueur décomposée pendant un temps suffisant pour solubiliser le monohydrate d'alumine contenu dans le résidu insoluble et former une suspension de boues rouges dans une liqueur d'aluminate de sodium dont le Rp doit être inférieur à 1.
g) Décantation et lavage à contre-courant du résidu insoluble de 2ème attaque constitué essentiellement des boues rouges qui sont éliminées alors que la liqueur d'aluminate de sodium de Rp < 1 issue de cette 2ème attaque, est recyclée en tête de procédé pour former, après mélange avec une aliquote de liqueur décomposée, la liqueur de 1ère attaque.

2. Procédé selon la revendication 1 caractérisé en ce que la teneur en alumine à l'état de monohydrate peut varier de 5 à 30% du poids total d'alumine contenu dans la bauxite mixte.

3. Procédé selon l'une des revendications 1 ou 2 caractérisé en ce que la bauxite avant attaque est broyée à l'état humide jusqu'à une granulométrie inférieure à 200 µm à partir d'une suspension, dont la concentration en matière sèche est comprise entre 700 et 1100 g de minerai par litre de suspension.

4. Procédé selon l'une quelconque des revendications 1 à 3 caractérisé en ce que la concentration en soude caustique de la liqueur décomposée est comprise entre 140 et 180 g Na₂O/litre et le rapport Rp est compris entre 0,5 et 0,75 et de préférence entre 0,55 et 0,65.

5. Procédé selon la revendication 1 caractérisé en ce que la liqueur décantée issue de 2ème attaque a un rapport Rp compris entre 0,8 et 0,95.

6. Procédé selon la revendication 1 caractérisé en ce que la liqueur d'attaque de la bauxite à basse température résultant du mélange de liqueur décomposée et de liqueur décantée issue de 2ème attaque a une concentration en soude caustique comprise entre 155 et 180 g Na₂O/litre et un rapport Rp compris entre 0,65 et 0,85.

7. Procédé selon l'une quelconque des revendications 1 à 6 caractérisé en ce que l'attaque à basse température ou 1ère attaque de la suspension de bauxite broyée après dilution dans la liqueur d'attaque est réalisée entre 130 et 190°C et de préférence entre 135 et 180°C pendant 5 minutes à 1 heure et de préférence pendant 5 à 20 minutes.

8. Procédé selon l'une quelconque des revendications 1 à 7 caractérisé en ce que la liqueur sursaturée décantée issue de 1ère attaque à un Rp compris entre 1,25 et 1,30 et une concentration en soude caustique comprise entre 160 et 180 g Na₂O/litre.

9. Procédé selon l'une quelconque des revendications 1 à 8 caractérisé en ce que l'eau de lavage du trihydrate d'alumine, précipité lors de la décomposition de la liqueur sursaturée et destiné à la production, est recyclée en tête de décomposition comme eau de dilution pour abaisser la concentration en soude caustique de la liqueur sursaturée filtrée entre 130 et 155 g Na₂O/litre.

10. Procédé selon la revendication 1 caractérisé en ce qu'avant 2ème attaque on effectue un apport de chaux au résidu de 1ère attaque constituée par le résidu insoluble décanté mélangé au gâteau insoluble de filtration de la liqueur d'aluminate de sodium sursaturée destinée à être décomposée et cela dans la proportion pondérale maximale de 8% et de préférence de 1 à 5% de CaO comptée par rapport à la quantité de bauxite attaquée.

11. Procédé selon la revendication 10 caractérisé en ce que l'apport de chaux au résidu de 1ère attaque est obtenu en partie par l'emploi d'un adjuvant de filtration à base de chaux pour la filtration de la liqueur sursaturée.

12. Procédé selon l'une quelconque des revendications 1 à 11 caractérisé en ce que l'attaque du résidu à haute température ou 2ème attaque est effectuée à une température comprise entre 220°C et 300°C et de préférence entre 240°C et 250°C pendant 10 minutes à 1 heure et de préférence pendant 15 à 20 minutes.

13. Procédé selon l'une quelconque des revendications 1 à 12 caractérisé en ce que la suspension de minerai broyé dans une aliquote de liqueur décomposée est soumise, avant attaque à basse température, à une dessilicatation par chauffage entre 90 et 107°C pendant 6 à 12 heures et de préférence entre 7 et 8 heures.

## Claims

1. A process for the treatment of bauxite containing alumina trihydrate and alumina monohydrate in a proportion of at least 5 % by weight of the total quantity of alumina in said bauxite, by low temperature caustic soda digestion of the ground bauxite to form a suspension which is decanted and filtered to separate a supersaturated sodium aluminate liquor for decomposition in the presence of a seed and an insoluble residue containing red mud and alumina monohydrate, said insoluble residue then being digested in a caustic soda medium at a higher temperature to dissolve the alumina monohydrate in the form of a sodium aluminate liquor which is separated from the red mud by decantation, the processbeing characterised by the following combination of operations:
a) low temperature digestion, or first digestion, of the ground bauxite by bringing it into contact with a liquor with a caustic soda concentration greater than or equal to 150 g Na₂O/litre and Rₚ of between 0.6 and 0.9, said digestion liquor being constituted by a mixture of an aliquot of spent liquor from a previous decomposition operation, with a decanted liquor from the high temperature digestion step, or second digestion step, for the insoluble residue,
b) after a contact time sufficient to dissolve the alumina trihydrate, decanting the suspension formed in the presence of a flocculent to separate a supersaturated sodium aluminate liquor with an Rₚ of between 1.20 and 1.35 and caustic soda concentration of at least 160 g Na₂O/litre from the insoluble residue,
c) filtering then diluting the filtered supersaturated liquor with the wash water for the alumina trihydrate produced in the preceding cycle to reduce the concentration to less than 160 g Na₂O/litre,
d) decomposing the supersaturated sodium aluminate liquor after dilution in the presence of a seed to precipitate alumina trihydrate where the wash water after filtration is preferably used as diluting water for the supersaturated liquor at the start of the decomposition step,
e) recycling the decomposed liquor to the head of the process in three aliquots which are respectively reintroduced to the grinding and second digestion steps as well as to the first digestion step after mixing with the decanted liquor from the second digestion step,
f) high temperature digestion, or second digestion, of the insoluble residue from decantation and filtration of the suspension previously formed by bringing it into contact with an aliquot of spent liquor for a sufficient time to dissolve the alumina monohydrate contained in the insoluble residue and form a suspension of red mud in a sodium aluminate liquor with an Rₚ of less than 1,
g) decanting and counter-current washing the insoluble residue from the second digestion step constituted mainly by red mud which is eliminated while the sodium aluminate liquor with Rₚ < 1 from the second digestion step is recycled to the head of the process to form the liquor for the first digestion step following mixture with an aliquot of spent liquor.

2. Process according to claim 1 characterised in that the monohydrate alumina content varies from 5 % to 30 % of the total weight of alumina contained in the mixed bauxite.

3. Process according to claim 1 or claim 2 characterised in that, prior to digestion, the bauxite is wet ground to a granulometry of less than 200 µm from a suspension in which the concentration of dry matter is between 700 and 1100 g of mineral per litre of suspension.

4. Process according to any one of claims 1 to 3, characterised in that the caustic soda concentration in the spent liquor is between 140 and 180 g Na₂O/litre and the ratio Rₚ is between 0.5 and 0.75, preferably between 0.55 and 0.65.

5. Process according to claim 1, characterised in that the decanted liquor from the second digestion step has a ratio Rₚ preferably between 0.8 and 0.95.

6. Process according to claim 1, characterised in that the low temperature bauxite digestion liquor produced by mixing the spent liquor and the decanted liquor from the second digestion step preferably has a caustic soda concentration of between 155 and 180 g Na₂O/litre and a ratio Rₚ preferably between 0.65 and 0.85.

7. Process according to any one of claims 1 to 6, characterised in that the low temperature digestion step, or first digestion step, for the suspension of ground bauxite following dilution in the digestion liquor is carried out between 130°C and 190°C, preferably between 135°C and 180°C for 5 minutes to 1 hour, preferably for 5 to 20 minutes.

8. Process according to any one of claims 1 to 7, characterised in that the decanted supersaturated liquor from the first digestion step has an Rₚ which is preferably between 1.25 and 1.30 and a caustic soda concentration preferably between 160 and 180 g Na₂O/litre.

9. Process according to any one of claims 1 to 8, characterised in that wash water for the alumina trihydrate precipitated during decomposition of the supersaturated liquor and intended for the production step, is recycled to the head of the decomposition step as diluting water to reduce the caustic soda concentration in the filtered supersaturated liquor to between 130 and 155 g Na₂O/litre.

10. Process according to claim 1, characterised in that, prior to the second digestion step, lime is added to the residue from the first digestion step constituted by the decanted insoluble residue mixed with the insoluble filtration cake from the supersaturated sodium aluminate liquor for decomposition in a maximum proportion of 8 %, preferably 1 % to 5 % by weight of CaO with respect to the quantity of bauxite digested.

11. Process according to claim 10, characterised in that lime addition to the residue from the first digestion step is partially achieved using a lime based filtration additive for filtering the supersaturated liquor.

12. Process according to any one of claims 1 to 11, characterised in that high temperature digestion of the residue, or second digestion, is carried out at a temperature between 220°C and 300°C, preferably between 240°C and 250°C for 10 minutes to 1 hour, preferably for 15 to 20 minutes.

13. Process according to any one of claims 1 to 12, characterised in that the suspension of ground mineral in an aliquot of spent liquor is desilicated before low temperature digestion by heating to between 90°C and 107°C for 6 to 12 hours, preferably between 7 and 8 hours.

## Patentansprüche

1. Verfahren zur Behandlung von Bauxit auf Aluminiumoxidtrihydratbasis mit einem Aluminiumoxidmonohydratgehalt im Gewichtsanteil von wenigstens 5 % der Aluminiumoxidgesamtmenge in diesem Bauxit durch Ätznatronaufschluß und bei niedriger Temperatur des gemahlenen Bauxits zur Bildung einer Suspension, die dekantiert und filtriert wird, um eine übersättigte Natriumaluminatflüssigkeit, die zur Zersetzung in Gegenwart eines Impfmittels bestimmt ist, und einen unlöslichen Rückstand zu trennen, der insbesondere Rotschlämme und das Aluminiumoxidmonohydrat enthält, welcher unlösliche Rückstand dann im Ätznatronmedium bei höherer Temperatur aufgeschlossen wird, um das Aluminiumoxidmonohydrat in Form einer Natriumaluminatflüssigkeit löslich zu machen, die durch Dekantieren von den Rotschlämmen getrennt wird, welches Verfahren durch die Kombination folgender Arbeitsgänge gekennzeichnet ist:
a) Aufschluß oder erster Aufschluß des vorab gemahlenen Bauxits bei niedriger Temperatur durch Kontaktierung mit einer Flüssigkeit, deren Ätznatronkonzentration über oder gleich 150 g Na₂O/Liter ist und deren Rp im Bereich von 0,6 bis 0,9 liegt, welche Aufschlußflüssigkeit aus der Mischung eines Teils zersetzter Flüssigkeit, die von einem vorhergehenden Zersetzungsarbeitsgang stammt, mit einer vom unlöslichen Rückstand dekantierten Flüssigkeit gebildet wird, die vom Aufschluß bei hoher Temperatur oder zweiten Aufschluß stammt.
b) Nach einer ausreichenden Kontaktdauer zum Löslichmachen des Aluminiumoxidtrihydrats Dekantieren der so gebildeten Suspension in Gegenwart eines Flockungsmittels zum Trennen einer übersättigten Natriumaluminatlösung vom unlöslichen Rückstand, deren Rp im Bereich von 1,20 bis 1,35 und deren Ätznatronkonzentration wenigstens gleich 160 g Na₂O/Liter sein müssen.
c) Filtrieren und dann Verdünnen der filtrierten übersättigten Flüssigkeit durch Waschwasser des in einem vorhergehenden Zyklus erzeugten Aluminiumoxidtrihydrats, um ihre Konzentration auf weniger als 160 g Na₂O/Liter zu senken.
d) Zersetzen der übersättigten Natriumaluminatlösung nach Verdünnung in Gegenwart eines Impfmittels, um Aluminiumoxidtrihydrat auszufällen, dessen Waschwasser nach Filtrieren vorzugsweise als Verdünnungswasser der übersättigten Flüssigkeit am Zersetzungsbeginn verwendet wird.
e) Rückführen der zersetzten Flüssigkeit zum Verfahrenskopf in 3 Teilmengen, die in die Stellen des Mahlens bzw. des zweiten Aufschlusses bzw. in die Stelle des ersten Aufschlusses nach Mischung mit der vom zweiten Aufschluß stammenden, dekantierten Flüssigkeit wiedereingeführt werden.
f) Aufschluß bei hoher Temperatur oder zweiter Aufschluß des unlöslichen Rückstands, der vom Dekantieren und vom Filtrieren der vorher gebildeten Suspension stammt, durch Kontaktierung mit einem Teil zersetzter Flüssigkeit während einer ausreichenden Zeit zum Löslichmachen des im unlöslichen Rückstand enthaltenen Aluminiumoxidmonohydrats und zum Bilden einer Suspension von Rotschlämmen in einer Natriumaluminatflüssigkeit, deren Rp unter 1 sein muß.
g) Dekantieren und Gegenstromwaschen des unlöslichen Rückstandes des zweiten Aufschlusses, der im wesentlichen aus Rotschlämmen besteht, die beseitigt werden, während die von diesem zweiten Aufschluß stammende Natriumaluminatflüssigkeit zum Verfahrenskopf rückgeführt wird, um nach Mischung mit einem Teil zersetzter Flüssigkeit die Flüssigkeit des ersten Aufschlusses zu bilden.

2. Verfahren nach dem Anspruch 1,
dadurch gekennzeichnet, daß
der Gehalt an Aluminiumoxid im Monohydratzustand von 5 bis 30 % des Gesamtgewichts von im Mischbauxit enthaltenem Aluminiumoxid variieren kann.

3. Verfahren nach einem der Ansprüche 1 oder 2,
dadurch gekennzeichnet, daß
der Bauxit vor dem Aufschluß im feuchten Zustand bis zu einer Korngröße unter 200 µm ausgehend von einer Suspension gemahlen wird, deren Konzentration an Trockensubstanz im Bereich von 700 bis 1100 g Mineral je Liter Suspension liegt.

4. Verfahren nach irgendeinem der Ansprüche 1 bis 3,
dadurch gekennzeichnet, daß
die Ätznatronkonzentration der zersetzten Flüssigkeit im Bereich von 140 bis 180 g Na₂O/Liter liegt und das Verhältnis Rp im Bereich von 0,5 bis 0,75 und vorzugsweise von 0,55 bis 0,65 liegt.

5. Verfahren nach dem Anspruch 1,
dadurch gekennzeichnet, daß
die vom zweiten Aufschluß stammende dekantierte Flüssigkeit ein Verhältnis Rp im Bereich von 0,8 bis 0,95 hat.

6. Verfahren nach dem Anspruch 1,
dadurch gekennzeichnet, daß
die Flüssigkeit zum Aufschluß des Oxids bei niedriger Temperatur, die sich aus der Mischung der zersetzten Flüssigkeit und der dekantierten Flüssigkeit vom zweiten Aufschluß ergibt, eine Ätznatronkonzentration im Bereich von 155 bis 180 g Na₂O/Liter und ein Verhältnis Rp im Bereich von 0,65 bis 0,85 hat.

7. Verfahren nach irgendeinem der Ansprüche 1 bis 6,
dadurch gekennzeichnet, daß
der Aufschluß bei niedriger Temperatur oder erste Aufschluß der Suspension von gemahlenem Bauxit nach Verdünnung in der Aufschlußflüssigkeit zwischen 130 und 190 °C und vorzugsweise zwischen 135 und 180 °C während 5 min bis 1 h und vorzugsweise während 5 bis 25 min durchgeführt wird.

8. Verfahren nach irgendeinem der Ansprüche 1 bis 7,
dadurch gekennzeichnet, daß
die vom ersten Aufschluß stammende, dekantierte, übersättigte Flüssigkeit einen Rp-Wert im Bereich von 1,25 bis 1,30 und eine Ätznatronkonzentration im Bereich von 160 bis 180 g Na₂O/Liter hat.

9. Verfahren nach irgendeinem der Ansprüche 1 bis 8,
dadurch gekennzeichnet, daß
das Waschwasser des Aluminiumoxidtrihydrats, das bei der Zersetzung der übersättigten Flüssigkeit ausgefällt wurde und zur Produktion bestimmt ist, zum Zersetzungskopf als Verdünnungswasser rückgeführt wird, um die Ätznatronkonzentration der filtrierten übersättigten Flüssigkeit in den Bereich von 130 bis 155 g Na₂O/Liter zu senken.

10. Verfahren nach dem Anspruch 1,
dadurch gekennzeichnet, daß
man vor dem zweiten Aufschluß einen Zusatz von Kalk zum Rückstand des ersten Aufschlusses, der aus dem dekantierten unlöslichen Rückstand in Mischung mit dem unlöslichen Filtrierkuchen der zur Zersetzung bestimmten übersättigten Natriumaluminatlösung besteht, und zwar in einem maximalen Gewichtsverhältnis von 8 % und vorzugsweise von 1 bis 5 % CaO, im Verhältnis zur Menge von aufgeschlossenem Bauxit berechnet, vornimmt.

11. Verfahren nach dem Anspruch 10,
dadurch gekennzeichnet, daß
der Zusatz von Kalk zum Rückstand des ersten Aufschlusses teilweise durch die Verwendung eines Filtrierhilfsstoffes auf Basis von Kalk für die Filtration der übersättigten Flüssigkeit erhalten wird.

12. Verfahren nach irgendeinem der Ansprüche 1 bis 11,
dadurch gekennzeichnet, daß
der Aufschluß des Rückstandes bei hoher Temperatur oder zweite Aufschluß bei einer Temperatur im Bereich von 220 °C bis 300 °C und vorzugsweise von 240 °C bis 250 °C während 10 min bis 1 h und vorzugsweise während 15 bis 20 min durchgeführt wird.

13. Verfahren nach irgendeinem der Ansprüche 1 bis 12,
dadurch gekennzeichnet, daß
die Suspension von gemahlenem Erz in einem Teil von zersetzter Flüssigkeit vor dem Aufschluß bei niedriger Temperatur einer Entsilicatisierung durch Erhitzen zwischen 90 und 107 °C während 6 bis 12 h und vorzugsweise zwischen 7 und 8 h unterworfen wird.
